# EUROPEAN PATENT APPLICATION

(11) **EP 1 980 151 A1**
(43) Date of publication of application: **15.10.2008**
(21) Application number: 08103259.1
(22) Date of filing: 31.03.2008
(51) Int. Cl.: A23B 7/04, A23L 1/216, A23L 1/307, A23L 1/217

(54) **Method for preparing cut potatoes fit for cooking and potatoes obtained thereby**

(30) Priority: 02.04.2007 IT BO20070235
(71) Applicant: Pizzoli S.P.A., 40054 Budrio (IT)
(72) Inventor: Bottardi Stefano, 40062, Molinella (IT); Blanda Giampaolo, 40054, Budrio (BO) (IT)
(74) Representative: Negrini, Elena

(57) **Abstract**

A method for preparing cut potato fit for eating after final cooking, comprising at least the steps of peeling, cleaning, sorting, cutting the potatoes obtaining potato sticks or potatoes cut pieces having other shape, comprising at least one cooking step of said pieces or sticks.

Said method further comprises the following sequence of steps:
- dipping the sticks, which already undergone at least one cooking step, into a saline solution;
- dipping the sticks in an aqueous solution containing pyrophosphate acidic sodium;
- a treatment of applying to the surfaces of the sticks a modified starches aqueous solution;
- a treatment for balancing the sticks surface humidity;
- an aromatization step by applying natural and/or nature identical aromas and/or artificial aromas on the surfaces of the sticks;
- a cooling step of the sticks;
- a deep-freezing or freezing step which makes the sticks ready for the packaging, the distribution, one final cooking also without oils or added fats and then for the eating.

## Description

The present invention relates to the agro- industrial sector and it refers to a method for preparing cut potatoes, for example in small sticks, fit for cooking, for example in oven, in order to provide a food, with the aspect and organoleptic property equivalent to fried potatoes chips but having the difference that they are without adding fats. The present invention refers furthermore to the prepared potatoes obtained by this method.

In particular the method of the present invention allows to prepare deep-frozen potatoes in domestic environment, community, restaurants and the like where the food is prepared and ready for the eating by the human being, by means of final cooking in oven, by hot air jet or by means of other cooking methods without adding fats, potatoes cooked with aspect, consistency, fragrance and taste comparable to those fried potatoes which are cut into sticks, for example, into rectangular or square cutting section with dimensions of 6x6 mm, 7x7 mm, 9x9 mm, 10x10 mm, 11x11 mm, 12x12 mm, 14x14 mm and bigger, or cut as discs and the like in straight, curved or waved shapes and in whatever other shape, with a fat content which is the same as the content in nature tuber.

The known methods of industrial preparation comprise the steps of peeling the potatoes tubers by steam or by mechanical abrasion; brushings the tubers in order to remove the superficial peel and subsequently rinsing them in order to remove the peel residuals and the superficial gelatinized starch after the peeling operation in case of steam peeling.

Such known methods further provide the subsequent sorting, for instance by means of electronics system, of the tubers in order to eliminate those excessively defective because of the superficial spots presence.

In the known methods, after the sorting, is provided the step of pre-heating the tuber which, once reached the temperature ranging between 50°C and 60°C, provides the best cut yield and the step of the mechanical cut, that implies the formation of sticks for the final eating, which sticks are subjected to a further electronic sorting in order to remove the defective potato sticks, as an example those with grey or greens spots; a step of cooking the sticks follows this latter step.

The cooking of these methods provides a first blanching or blanching at 90° C for a brief period of time, in order to eliminate the oxidations caused by an enzymatic origin of the polyphenolic substances naturally present in the tubers, a second blanching carried out at lower temperatures, from a minimum of 65° C to a maximum of 75° C, which has the object to create the gelatinization of the starch present in the potatoes tubers and to eliminate the reduc ing sugars and the metal ions, as an example cupreous and cupric, ferrous and ferric ions that in general act as oxidative catalyst.

Said second blanching is followed by a conveying through an aqueous solution containing sodium acid pyrophosphate, by a drying step at different temperatures in function of the dry substance of the sticks in order to eliminate the superficial water, and part of the free water present inside the sticks and by a step of balancing the dampness which precedes a pre-frying.

Said pre-frying is known as a fast system of dehydration which occurs because of the product immersion in oil at high temperature ranging from 160 °C to 185 °C.

In this step of fast superficial dehydration of the stick, a further loss of water, exiting from the stick, occurs and a simultaneous pre-frying oil penetration

Said oil that penetrates into the stick determines the contents of the fats added in the final product.

The pre-frying step guarantees the formation of a starch-protein complex which gives rise to the cooking "crust".

A cooling and freezing step completes the known traditional technologic method.

The superficial crust of the sticks is subsequently enhanced by the final homemade or professional cooking, in oven or with the re-frying which introduces further oil in the sticks.

A drawback of said known methods consists in that they provide cut potatoes very rich of the pre-frying oil which, as seen, is of the saturated type which according to the nutritionist makes them potentially harmfulness for the consumer health.

An object of the present invention is to propose a method for preparing cut potatoes without added fats and fit to be final cooking in order to provide to the eating cut potatoes similar to the fried potatoes.

Another object of the present invention is to propose a method fit to provide cut potatoes, conserved by freezing or deep freezing and that may undergo a final cooking without added fats or oils providing cut potatoes ready to be eaten and similar, in terms of appearance, taste, aroma and consistency to the oil fried potatoes.

Further object is to propose a fast, easily controllable, feasible and safe method.

Another object is to propose cut potatoes, without added fats and conserved by freezing or deep freezing, which may be eaten after a final cooking without fats and oils, and provided with organoleptic, consistency and appearance features similar to the fried potatoes ones.

Further object is to propose a method fit to provide cut potatoes prepared without added fats, cut with a stick shape, or with any other shape, and to propose cut potatoes obtained by means of said method.

The method, object of the present invention, for the preparation with uncooked oils, of cut potatoes fit to the final cooking and the eating, provides the following sequence of steps.

After possible washing of the potatoes the method provides to carry out the peeling. The peeling may be carried out mechanically, by abrasion or by steam, and is followed by a brushing in order to remove the peel residuals and/or the residual thereof.

A following rinsing remove the peel residuals, and in case of peeling by steam, removes the superficial starch gelatinized because of the steam action.

An electronic sorting follows in order to eliminate the defective tubers, for instance because of the presence of superficial spots, frequently caused by mechanical damages due to the product harvesting and transport steps.

The successive steps of the method consist in the pre-heating of the tuber, which reached a temperature comprised between about 50° C and 60° C, provide the best cut yield.

Successively the mechanical cut is carried out which implies the stick formation having rectangular or preferably square cut section with side equal or greater than about 5mm.

Alternatively it is provided that the mechanical cut confers other shapes to the cut potatoes, for instance a disc-like, curved, geometrically shaped, waved shape or others.

In order to simplify in the following the cut potato pieces will be indicated also as sticks, independently to their stick, disc-like, curved shape or of other type.

After the cut a further electronic sorting of the sticks is carried out in order to remove the defective ones, as an example, grey or green spotted.

The subsequent step is the cooking and it comprises a first blanching of the sticks at the temperature of 90° C for brief periods time, followed by a second blanching carried out at lower temperatures, comprised between a minimum of about 65°C up to a maximum of about 75° C. The first blanching has the object of eliminating the oxidations having enzymatic causes, charged to the polyphenolic substances, naturally present in the tubers, the second blanching has the object of creating the gelatinization of the starch present in the potato tubers.

This step has also the object of eliminating the reducing sugars, and in addiction of eliminating from the sticks metallic ions being generally oxidative catalysers (for instance cuprous or cupric ions, ferrous or ferric ions).

The blanching step is allowed by a step of collection and immersion of the blanched sticks in a basin containing a saline solution. Said saline solution consists in water, at the temperature comprised between about 40° C and abut 50° C, having in solution sodium chloride and/or iodate sodium chloride at the concentration comprised between 0,5% and 2%, which because of osmosis migrate inside the sticks, assuring the inner flavour.

A transport is subsequent, through an aqueous solution containing the sodium acid pyrophosphate.

Subsequently to the treatment with acid sodium pyrophosphate a treatment with an aqueous solution is carried out, said solution having modified starches at a concentration comprised between about 0,5 and about 2% of said modified starches.

Said modified starches may consist in rice modified starch or potato modified starch, that is in a mixing combination thereof.

The treatment solution has a suitable temperature, for instance comprised between 65 °C and 70 °C, fit to maintain the gelatinization state of the amylopectins.

The contact time period among the sticks and this solution is of at least a second.

Subsequently to the treatment with modified starches a drying step occurs.

The drying temperature with the method object of the present invention is independent from the dry substance of the raw materials.

Said drying is directed to eliminate the water brought with said treatment, making adherent to the stick the film of combined solution or of single added starches.

The useful temperature for carrying out said drying is of about 60° C, allowing to free it self from the dry substance of the raw material, and to carry out an energy saving in said drying step, whose duration is previewed of about 13 seconds.

The step which follows the drying step is an balancing step of the stick humidity, that is of the cut potatoes.

The balancing occurs maintaining the stick in a ambient temperature for 10 minutes in order to obtaining the equilibration of the humidity between the inner portion and the outer surface of the sticks.

The outer starch, thus naturally rehydrated after the humidity migration from the inside towards the outside, assumes an adhesive function absolutely necessary for the in powder aroma maintaining distributed in the following step.

The balancing is made during the delivery of said sticks between the previous drying step and the following aromatization step,

As seen, after the humidity balancing the method provides the aromatization step which occurs bringing natural and/or nature identical and/or artificial in powder aromas onto the sticks surface. Said bringing occurs applying said aromas by means of a dosing unit made of a tank and a conveyor belt provided with a load cell.

Said aromas may be, for instance, of the type classified by the Italian law in force in the 2007 (Dlg 107/99) as "aromas" and/or natural and/or nature identical aromas.

The surface humidity of the sticks that is of the cut potato, in combination with the application of aromas supported by hygroscopic substrates, as Sodium Chloride or Maltodextrin, already applied make the treatment touch tangible.

Said aromatization step allows the right dosing of the aroma by means of a system comprising a conveyor belt provided with a load cell, a sprinkling with an hopper containing the aroma to be brought, and a rotating cylinder having horizontal axis passed through by the sticks, or otherwise cut potatoes, for the homogeneous distribution of the aroma.

The method provides optional cooling step and freezing step which complete the technological preparing cycle which is followed by the packaging.

The cut potato, prepared for the final cooking also without oil or fat for obtaining a dish similar to the fried potatoes, and obtained by the invention method, consists in pieces or in sticks obtained by the potato.

Each stick of the potato is at least partially cooked, and enriched of a salt, for instance Sodium Chloride or Iodated Sodium Chloride penetrated therein by means of osmosis, and its surface has sodium pyrophosphate acid and/or product derived by its combination with the potato components, one or more modified starches, for instance obtained by the rice and/or the potatoes, also in combination with the sodium pyrophosphate acid and/or with the potato components.

The sticks surface has also natural and/or nature identical and/or artificial aromas. The sticks are frozen or deep frozen.

The invention further provides to use Potassium Iodide instead of, or in addition to, the sodium chloride and/or the iodated sodium chloride.

An advantage of the present invention is to provide a method for preparing cut potatoes without added fats and fit to be final cooking in order to provide to the eating cut potatoes similar to the fried potatoes.

Another advantage of the present invention is to provide a method fit to provide cut potatoes, conserved by freezing or deep freezing and that may undergo a final cooking without added fats or oils providing cut potatoes ready to be eaten and similar, in terms of appearance, taste, aroma and consistency to the potatoes fried with oil.

Further advantage is to provide a fast, easily controllable, feasible and safe method.

Another advantage is to provide cut potatoes, without added fats and conserved by freezing or deep freezing, which may be consumed after a final cooking without fats and oils, and provided with organoleptic, consistency and appearance features similar to the fried potatoes ones.

Further advantage is to provide a method fit to provide cut potatoes prepared without added fats, cut with a stick shape, or with any other shape, and to propose cut potatoes obtained by means of said method.

## Claims

1. Method for preparing cut potato fit for eating after final cooking, comprising at least the steps of peeling, cleaning, sorting, cutting the potatoes obtaining potato sticks or potatoes cut pieces having other shape, comprising at least one cooking step of said pieces or sticks; said method being **characterized in that** it comprises the following sequence of steps:
- a dipping step of the sticks, which already undergone at least one cooking step, into a saline solution;
- a dipping step of the sticks in an aqueous solution containing pyrophosphate acidic sodium;
- a treatment of applying to the surfaces of the sticks a modified starches aqueous solution;
- a treatment for balancing the sticks surface humidity;
- an aromatization step by applying natural and/or nature identical aromas and/or artificial aromas on the surfaces of the sticks;
- a cooling step of the sticks;
- a deep-freezing or freezing step which makes the sticks ready for the packaging, the distribution, one final cooking also without oils or added fats and then for the eating.

2. Method according to claim 1 **characterized in** using for the treatment a modified starches aqueous solution, having a modified starch concentration ranging about between 0,5 - 2%.

3. Method according to claim 1 or claim 2 **characterized in** using modified starches of rice and/or potatoes, singularly or in any of their combinations.

4. Method according to any of the previous claims **characterized in** using a modified starches solution at a temperature for maintaining the gelatinization status of the amylopectins.

5. Method according to claim 1 **characterized in** using a cooking step comprising at least a first blanching of the sticks followed by a second blanching of the sticks.

6. Method according to claim 1 **characterized in** carrying out the first blanching at the temperature of about 90°C for short periods and then in carrying out the second blanching at lower temperatures, ranging between a minimum temperature of about 65°C to a maximum temperature of about 75°C.

7. Method according to claim 1 **characterized in** carrying out a drying phase of the sticks after the treatment of sticks with the modified starches solution and before the treatment of the humidity balancing of the sticks.

8. Method according to claim 7 **characterized in** carrying out a drying step of the sticks.

9. Method according to claim 8 **characterized in** carrying out the drying at a lapse rate of about 60°C, and independently from the dryness substance of potatoes

10. Method according to claim 1 **characterized in** carrying out the aromatization phase by applying natural aromas and/or nature identical aromas and/or artificial aromas at least by means of a dosing unit comprising a tank and a conveyor equipped with a load cell.

11. Method according to claim 1 or claim 10 **characterized in** distributing the aromas in the aromatization step by means of a system comprising a conveyor with a load cell, an aspersion system with a hopper containing the aroma to be applied, and a rotating cylinder with horizontal axis for the pass-through of the sticks or the potatoes cut in other manner, for the homoge nous distribution of the aroma.

12. Method according to claim 10 **characterized in** using classified aromas, according the Italian Norm Dlg 107/99, as "aromas" and/or natural aromas and/or nature identical aromas.

13. Method according to claim 10 **characterized in** combining, subsequently to the humidity balancing step, hygroscopic substrates to the aromas such as carrier substrate of the aromatic fraction.

14. Method according to claim 1 **characterized in** carrying out at the same time or subsequently to the aromatization an optional step of surface salting with Sodium Chloride or Iodine Sodium Chloride.

15. Method according to claim 1 **characterized in** carrying out the peeling of the potatoes in mechanical manner, or by steam

16. Method according to claim 15 **characterized in** carrying out a brushing of the potatoes after the peeling.

17. Method according to claim 1 **characterized in** carrying out a rinsing of potatoes after the brushing.

18. Method according to claim 1 **characterized in** carrying out the sorting of the potatoes, subsequently to rinsing, by electronically controlled means.

19. Method according to claim 1 **characterized in** carrying out a pre-heating step of the potatoes before the cutting in order to bring them to a temperature ranging between 50°C and 60°C.

20. Method according to claim 1 **characterized in** carrying out a sorting step of the sticks after the potatoes are cut.

21. Method according to claim 1 **characterized in** using a solution in water of Sodium Chloride and/or Potassium Iodide for dipping the sticks in a saline solution.

22. Method according to claim 2 **characterized in** using a solution with a concentration of Sodium Chloride and/or Potassium Iodide ranging between 0,5% and 2%.

23. Method according to claim 2 **characterized in** using a solution at a temperature comprised ranging between about 40°C and 50°C.

24. Cut potato, prepared for the cooking, obtained by means of the method of anyone of proceeding claims **characterized in that** each potato piece or stick is at least partially cooked, is enriched by salt and its surface presents acid sodium pyrophosphate and/or products of its combination with the components of the potatoes, modified starches also in combination with acid sodium pyrophosphate and/or with the components of the potato and natural aromas and/or nature identical aromas and/or artificial aromas.

25. Cut potato, according to claim 24 **characterized in that** it is deep-frozen or frozen.
